# EUROPÄISCHE PATENTSCHRIFT

(11) **EP 3 382 196 B1**
(45) Veröffentlichungstag und Bekanntmachung des Hinweises auf die Patenterteilung: **16.11.2022**
(21) Anmeldenummer: 18164187.9
(22) Anmeldetag: 27.03.2018
(51) Int. Cl.: F03D 7/02

(54) **WINDENERGIEANLAGE MIT KURZSCHLUSSSTROMVERBESSERTEM ANLAGENTRANSFORMATOR**
WIND TURBINE WITH INSTALLATION TRANSFORMER WITH IMPROVED SHORT CIRCUIT CURRENT
ÉOLIENNE DOTÉE DU TRANSFORMATEUR D'INSTALLATION À COURANT DE COURT-CIRCUIT RENFORCÉ

(30) Priorität: 30.03.2017 DE 102017003220
(43) Veröffentlichungstag der Anmeldung: 03.10.2018
(73) Patentinhaber: Siemens Gamesa Renewable Energy Service GmbH, 20097 Hamburg (DE)
(72) Erfinder: Stoltenberg, Henning, 24211 Preetz (DE)
(74) Vertreter: Glawe, Delfs, Moll

(56) Entgegenhaltungen:
- DE-A1-102010 014 165
- DE-A1-102013 203 540

## Beschreibung

Die Erfindung betrifft eine Windenergieanlage mit einem Windrotor, einem davon angetriebenen Generator, der mit einem Umrichter zusammenwirkt zur Erzeugung elektrischer Leistung, einer Drehzahlregelung und einer damit zusammenwirkenden Leistungssteuerung, wobei die Drehzahlregelung ein Solldrehzahlsignal an die Leistungssteuerung ausgibt. Die Erfindung umfasst außerdem ein entsprechendes Verfahren zum Betreiben einer Windenergieanlage.

Mit den zunehmenden Anforderungen an Windenergieanlagen zur Stabilisierung der Netze im Fall eines Frequenzeinbruchs beizutragen, wachsen auch die Anforderungen der Netzbetreiber zum maximalen Leistungseinbruch nach einer Bereitstellung von Primärregelleistung durch die Windenergieanlage. Aus dem Stand der Technik sind verschiedene Verfahren zur Bereitstellung von Primärregelleistung bekannt, bei denen die erforderliche Primärregelleistung aus der Schwungenergie des Rotors bezogen wird.

Aus der WO 2011/124696 ist eine Regelung für Windenergieanlagen bekannt, die auch bei instationären Windgeschwindigkeiten ausreichende Primärregelleistung bereitstellt. Hier ist eine Zusatzregelung vorgesehen, die einen Eingang für eine gewünschte Zusatzleistung aufweist und dazu ausgebildet ist, daraus unter Berücksichtigung eines Rotorträgheitsmoments ein Drehzahländerungssignal zu erzeugen und als Ausgangssignal auszugeben, das über ein Verknüpfungsglied dem Solldrehzahlsignal hinzugefügt wird.

Unter einem Drehzahländerungssignal wird die zeitliche Drehzahländerung verstanden, welche daraus folgt, dass aus der Schwungmasse des Windrotors Energie entnommen wird. Diese Energie entspricht der Differenz zwischen der in der Schwungmasse gespeicherten kinetischen Energie vor und nach Berücksichtigung der Drehzahländerung. Aufgrund des Drehzahländerungssignals wird die gewünschte Zusatzleistung zur Verfügung gestellt. Dabei wird nicht die von der Windenergieanlage an das Netz abgegebene Leistung geregelt, sondern die aus der Schwungmasse des Windrotors entnommene Energie gesteuert. Nach der Beendigung der Einspeisung der Zusatzleistung erfolgt wieder ein Übergang zum Normalbetrieb. Dieser erfolgt aber nicht abrupt, sondern allmählich, um Instabilitäten im mechanischen und elektrischen System der Windenergieanlage zu vermeiden.

Der Erfindung liegt die Aufgabe zugrunde, einen Leistungseinbruch einer Windenergieanlage nach der Bereitstellung einer angeforderten Zusatzleistung zu reduzieren. Die Aufgabe wird gelöst mit den Merkmalen der unabhängigen Ansprüche. Vorteilhafte Ausführungsformen sind in den Unteransprüchen angegeben.

Erfindungsgemäß ist ein Offsetmodul zwischen der Drehzahlregelung und der Leistungssteuerung vorgesehen, welches dazu ausgelegt ist, ein Offsetsignal zu generieren und dem Solldrehzahlsignal hinzuzufügen.

Der Erfindung liegt die Erkenntnis zugrunde, dass ein Unterschwingen der Leistung nach Beendigung der Bereitstellung einer Zusatzleistung vermieden werden kann, indem das Solldrehzahlsignal mit einem Offsetsignal versehen wird. Das modifizierte Solldrehzahlsignal führt zu einem geringeren Einbruch der Ist-Drehzahl und damit zu einem verringerten Leistungseinbruch. Die erfindungsgemäße Windenergieanlage ermöglicht es dadurch, bei gleichbleibendem Leistungseinbruch eine erhöhte Zusatzleistung bereitzustellen.

Zunächst werden einige Begriffe erläutert:
Unter einer angeforderten Zusatzleistung wird die gewünschte Primärleistung verstanden, die eine Windenergieanlage zur Stabilisierung des Netzes einspeist.

Unter dem Normalzustand einer Windenergieanlage wird jeder Zustand der Windenergieanlage verstanden, in dem die Windenergieanlage keine angeforderte Zusatzleistung bereitstellt.

Unter dem Begriff Solldrehzahlsignal ist die Ausgangsgröße der Drehzahlregelung zu verstehen, die als Parameter an die Leistungssteuerung, das heißt die Drehzahlsteuerung der Windenergieanlage, und/oder den Generator bzw. den an den Generator angeschlossenen Umrichter angelegt ist zur Einstellung der Generatordrehzahl. In den meisten Fällen ist dies ein Soll-Drehzahlsignal selbst, jedoch kann dies auch ein Soll-Drehmomentsignal sein. Die Drehzahlreglung kann ebenfalls mit einem Blattwinkelregler zusammenwirken, sodass ein bestimmter Anstellwinkel der Rotorblätter (Pitch-Winkel) gegenüber dem anströmenden Wind eingestellt wird, um eine Drehzahl des Windrotors zu erreichen. Auch solche Signale sind von dem funktional zu verstehenden Begriff des "Solldrehzahlsignals" umfasst. Unter einer Leistungssteuerung ist eine Einrichtung zu verstehen, welche die Abgabe elektrischer Leistung durch den von dem Generator und Umrichter gebildeten mechanisch-elektrischen Energiewandler kontrolliert. Üblicherweise wirkt sie direkt auf den Umrichter ein, jedoch soll es nicht ausgeschlossen sein, dass sie auch oder alternativ auf den Generator unmittelbar einwirkt.

Erfindungsgemäß ist das Offsetmodul dazu ausgelegt ist, das Offsetsignal in Abhängigkeit eines Zustandswerts zu generieren, insbesondere beschreibt der Zustandswert einen Normalzustand oder einen Zustand der Zusatzleistungserzeugung. Während es in einem Zustand der Zusatzleistungserzeugung kontraproduktiv wäre, einen positiven Offset auf die Solldrehzahl aufzuschlagen, da dieses der Bereitstellung der Leistung entgegenwirkt, kann es im Normalbetrieb hilfreich sein, um ein absinkendes Drehzahlsignal aufzufangen. Der Offset kann so gezielt dort eingesetzt werden, wo ein Unterschwingen der Drehzahl zu erwarten ist, nämlich nach einem Zustand der Zusatzleistungserzeugung.

Erfindungsgemäß steigt das Offsetsignal an, nachdem der Zustandswert von einem Zustand der Zusatzleistungserzeugung in einen Normalzustand übergeht. Um nach dem Bereitstellen der Zusatzleistung ein weiteres unerwünschtes Absinken der Drehzahl zu verhindern, wird dem Drehzahlsollsignal ein bevorzugt kontinuierlich steigender Offset hinzugefügt um eine kontinuierliche Veränderung der Drehzahl zu bewirken. Auf diese Weise können Instabilitäten im mechanischen und elektrischen System der Windenergieanlage vermieden werden. Während der Zusatzleistungserzeugung sinkt die Drehzahl ab, ein ansteigender Offset, der die Solldrehzahl anhebt, würde dem Bereitstellen der Zusatzleistung hier nur im Wege stehen.

Vorzugsweise weist das Offsetsignal einen sprunghaften Anstieg auf. Ein sprunghafter oder abrupter Anstieg führt gemäß der Erfindung dazu, dass ein Unterschwingen der Leistung vollständig vermieden wird, unabhängig davon, ob nach der Beendigung der Einspeisung der Zusatzleistung vorrangig die Drehzahl wieder ansteigt oder vorrangig Leistung zur Einspeisung in das Netz erzeugt wird. Ein abrupter Anstieg der Solldrehzahl führt gemäß der Erfindung zu einem stetigen Verlauf der Ist-Drehzahl und damit zu einem geringeren Leistungseinbruch.

Das Offsetmodul umfasst vorzugsweise einen gespeicherten Leistungswert und das Offsetsignal steigt in Abhängigkeit von dem gespeicherten Leistungswert an. Diese Ausführungsform der Erfindung führt dazu, dass die Höhe des Offsets entsprechend der Ausgangsleistung gewählt werden kann. Die Berücksichtigung eines Leistungswertes bei der Generierung des Offsetsignals ermöglicht es, durch das Offsetsignal präzise einen vorgegebenen Leistungswert einzustellen und so auch ein Überschwingen der Drehzahl zu vermeiden.

Der gespeicherte Leistungswert entspricht vorteilhafterweise einem aktuellen Leistungswert in einem Normalbetrieb der Windenergieanlage und wird bei jedem Übergang des Zustandswerts von dem Normalzustand in den Zustand der Zusatzleistungserzeugung aktualisiert. Der Anstieg erfolgt somit immer in Abhängigkeit von einem gespeicherten Leistungswert der Windenergieanlage, der den Normalbetrieb der Windenergieanlage beschreibt, der auch nachdem für eine gewisse Zeit eine Zusatzleistung in das Netz eingespeist wurde, wieder eingestellt werden soll. Diese Zeitintervalle liegen in der Regel lediglich im Bereich einiger Sekunden, sodass es wünschenswert ist, im Anschluss an die Zusatzleistungserzeugung den Ausgangszustand der Windenergieanlage wieder herzustellen.

Vorzugsweise weist das Offsetmodul einen Timer auf, der ein festes Zeitintervall vorgibt, für dessen Dauer das Offsetsignal ansteigt, besonders bevorzugt stetig ansteigt. Eine zeitliche Begrenzung des Anstiegs des Offsetsignals hat den Vorteil, dass kein starkes Überschwingen des Drehzahlwertes provoziert wird und das System in einem stabilen Zustand bleibt.

Bevorzugt überschreitet das durch den Timer definierte Zeitintervall eine Dauer von 5 Sekunden, vorzugsweise 2 Sekunden, weiter vorzugsweise 1 Sekunde nicht. Es hat sich herausgestellt, dass eine Zeitdauer von wenigen Sekunden ausreichend ist, um einen genügend großen Offset zu erzeugen, der ein Unterschwingen der Leistung verhindert.

In einer bevorzugten Ausführungsform fällt das Offsetsignal nach Ablauf des Timers ab. Dies ermöglicht es der Ist-Drehzahl sich der Solldrehzahl kontinuierlich und ohne Überschwingen anzunähern. Auf diese Weise wird ein weicher Übergang der Windenergieanlage zum Normalbetrieb sichergestellt.

Es kann vorteilhafter Weise vorgesehen sein, dass das Offsetsignal auf einen Wert, der dem Produkt aus dem gespeicherten Leistungswert und einem Faktor entspricht, abfällt. Die Reduzierung des Offsets auf einen Wert, der entsprechend des ursprünglichen Leistungswertes skaliert ist, ermöglicht es dem Offsetmodul der Windenergieanlage trotz variabler Umgebungsbedingungen eine gleichbleibende Reduzierung des Leistungseinbruchs hervorzurufen.

Das Offsetmodul umfasst gemäß einer vorteilhaften Ausführungsform der Erfindung einen Steigungsbegrenzer, der den Anstieg und/oder den Abfall des Offsetsignals begrenzt. Windenergieanlagen sind großen mechanischen Kräften ausgesetzt. Eine Begrenzung der Änderungsrate des Offsetsignals ist daher wichtig, um die Kräfte, die auf die Anlage wirken in einen beherrschbaren Rahmen zu halten. Zu diesem Zweck ist die Änderung des Offsets und damit des Drehzahlsollsignal begrenzt. Die Begrenzung kann für den Anstieg und/oder den Abfall individuell angepasst werden.

Die Erfindung umfasst weiter ein entsprechendes Verfahren zum Betreiben einer Windenergieanlage, die einen Windrotor, einen damit angetriebenen Generator, der mit einem Umrichter zusammenwirkt zur Erzeugung elektrischer Leistung, einer Drehzahlregelung und einer damit zusammenwirkenden Leistungssteuerung umfasst, mit den folgenden Schritten: Ausgeben eines Solldrehzahlsignals durch die Drehzahlregelung, Generieren eines Offsetsignals, Hinzufügen des Offsetsignals zu dem Solldrehzahlsignal und Ausgeben des modifizierten Solldrehzahlsignals an die Leistungssteuerung.

Vorzugsweise kann das Verfahren unter Verwendung der erfindungsgemäßen Windenergieanlage ausgeführt werden. Zur näheren Beschreibung wird auf vorstehende Erläuterung verwiesen.

Das erfindungsgemäße Verfahren kann mit Merkmalen, die im Zusammenhang mit der erfindungsgemäßen Windenergieanlage beschrieben sind, fortgeführt werden. Die erfindungsgemäße Windenergieanlage kann mit Merkmalen, die im Zusammenhang mit dem erfindungsgemäßen Verfahren beschrieben sind, fortgeführt werden.

Die Erfindung wird nachfolgend unter Bezugnahme auf die beigefügten Zeichnungen anhand einer vorteilhaften Ausführungsform beispielhaft beschrieben. Es zeigen:
Fig. 1: eine Übersichtsdarstellung einer Windenergieanlage in einem Ausführungsbeispiel der Erfindung;
Fig. 2: ein Blockdiagramm eines erfindungsgemäßen Offsetmoduls;
Fig. 3: eine schematische Darstellung des erfindungsgemäßen Verfahrens zum Betreiben einer Windenergieanlage;
Fig. 4: Drehzahldiagramme aus dem Stand der Technik (a), der erfindungsgemäßen Windenergieanlage (b) und des erfindungsgemäßen Offsetsignals;
Fig. 5: Leistungs- (a) und Drehmomentdiagramm (b) der erfindungsgemäßen Windenergieanlage entsprechend Fig. 4b.

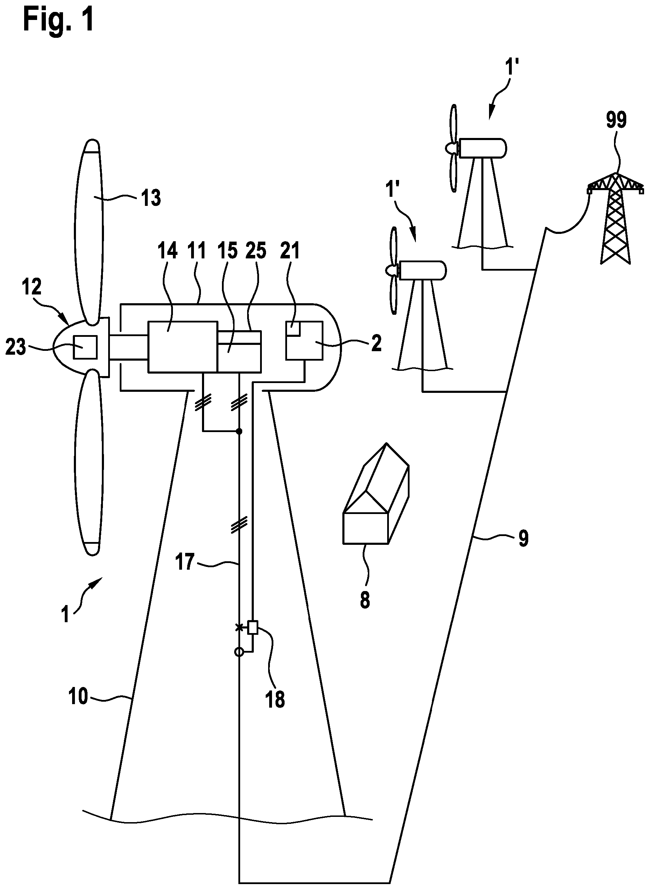

In Fig. 1 ist eine Windenergieanlage gemäß einem Ausführungsbeispiel der Erfindung gezeigt. Die Windenergieanlage umfasst einen Turm 10, an dessen oberem Ende ein Maschinenhaus 11 in Azimutrichtung schwenkbar angeordnet ist. Ein Windrotor 12 mit mehreren hinsichtlich ihres Einstellwinkels verstellbaren Rotorblättern 13 ist drehbar an einer Stirnseite des Maschinenhauses 11 gelagert. Der Windrotor 12 treibt über eine Rotorwelle einen Generator 14 an. Dieser erzeugt zusammen mit einem an ihn angeschlossenen Umrichter 15 elektrische Energie. Die Leitung 17 ist über einen nicht gezeigten Transformator an ein windparkinternes Sammelnetz 9 angeschlossen. Sie kann auch über einen Transformator direkt an ein Mittel- oder Hochspannungsnetz 99 angeschlossen sein.

Die Windenergieanlage umfasst ferner eine an dem Maschinenhaus 11 angeordnete Betriebssteuerung 2, welche (über nicht dargestellte) Kommunikationsmittel mit einem Parkmaster 8 eines Windparks verbunden ist. Die Betriebssteuerung 2 umfasst unter anderem die Drehzahlregelung 21 für den Windrotor 12. Die von der Windenergieanlage 1 erzeugte und über die Leitung 17 abgegebene elektrische Leistung wird über eine Leistungsmess-einrichtung 18 erfasst und an die Betriebssteuerung 2 angelegt.

Ein Parkmaster 8 bildet die übergeordnete Führungsinstanz für die Windenergieanlagen 1, 1' des Windparks, mit denen er über nicht gezeigte Kommunikationsmittel verbunden ist. Die Windenergieanlagen 1' können vom gleichen Typ wie die Windenergieanlage 1 sein, dies ist aber keine zwingende Voraussetzung. Die von den verschiedenen Windenergieanlagen erzeugte elektrische Leistung wird über ein windparkinternes Sammelnetz 9 zu einem Verknüpfungspunkt geführt, an dem der Windpark über einen nicht dargestellten Transformator an ein der Energieübertragung dienendes Netz angeschlossen ist.

Der Drehzahlregler 21 ist eine Einheit der Betriebssteuerung 2, die den Sollwert für eine Drehzahl des Windrotors 12 bestimmt und mit einem Leistungsregler 25, insbesondere einem Umrichterregler in der Weise zusammenwirkt, dass ein solches elektrisches Moment eingestellt wird, um die entsprechende Drehzahl des Windrotors 12 zu erreichen. Der Drehzahlregler 25 kann ebenfalls mit einem Blattwinkelregler 23 zusammenwirken, sodass ein bestimmter Anstellwinkel der Rotorblätter (Pitch-Winkel) gegenüber dem anströmenden Wind eingestellt wird, um eine Drehzahl des Windrotors 12 zu erreichen.

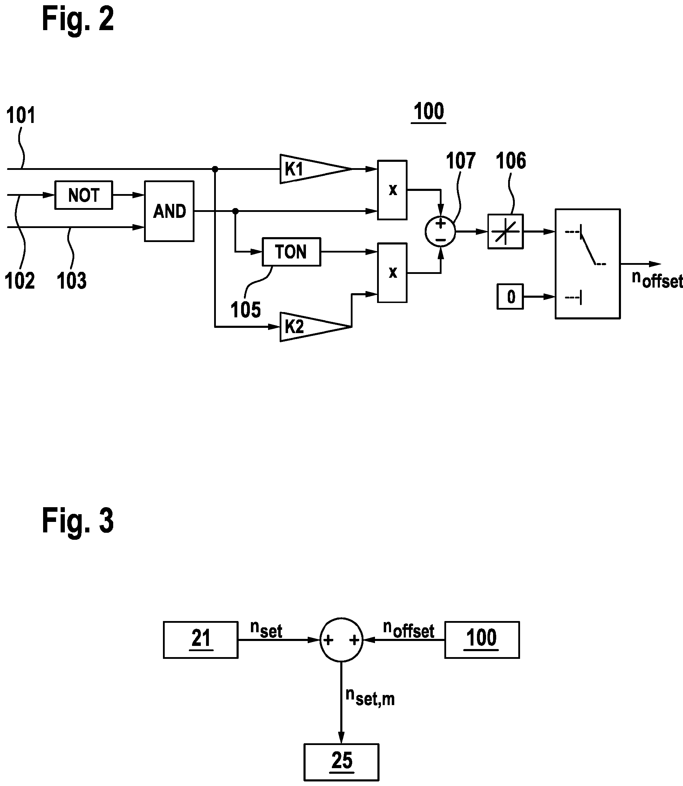

Fig. 2 zeigt eine erfindungsgemäße Ausführungsform des Offsetmoduls 100. In dieser Ausführungsform sind als Eingänge des Offsetmoduls 100 ein gespeicherter Leistungswert 101, ein Zustandswert 102 sowie ein Aktivierungswert 103 vorgesehen. Der gespeicherte Leistungswert 101 ist ein aktueller Leistungswert der den Zustand der Windenergieanlage beschreibt. Dieser kann entweder permanent ausgelesen und aktualisiert werden, so lange der Zustandswert 102 Normalbetrieb indiziert, oder bei einem Übergang von Normalzustand in den Zustand der Zusatzleistungserzeugung ausgelesen werden. In jedem Fall repräsentiert der gespeicherte Leistungswert den Leistungswert der Windenergieanlage vor der Bereitstellung der angefragten Zusatzleistung.

Der Zustandswert 102 zeigt den aktuellen Zustand der Windenergieanlage an, dabei ist beispielhaft mit einer 0 der Normalzustand und mit 1 der Zustand der Zusatzleistungserzeugung bezeichnet. Beim Übergang in den Zustand der Zusatzleistungserzeugung wird auch der Aktivierungswert 103 auf 1 gesetzt. Somit wird sobald der Aktivierungswert 103 auf 1 und der Zustandswert auf 102 auf 0 stehen, der Timer 105 gestartet. So lange der Timer 105 nicht abgelaufen ist kommt an dem Summationsglied 107 nur an dem oberen Eingang ein von 0 verschiedener Wert an, nämlich K1 multipliziert mit gespeichertem Leistungswert 101. Somit liegt am Eingang des Steigungsbegrenzers 106 nun dieser Wert an. Sollte sich die Differenz dieses Wertes zu dem zuvor dort angekommenen Wert als größer als die maximale durch den Steigungsbegrenzer 106 erlaubte Differenz herausstellen, wird dieser auf eine maximale Differenz beschränkt. Dies findet so lange statt, bis entweder am Ausgang des Steigungsbegrenzers 106 der Wert des Zustandswertes 101 multipliziert mit K1 anliegt, oder der Timer 105 abgelaufen ist. Der Ausgang des Steigungsbegrenzers 106 wird als n_{offset} am Ausgang des Offsetmoduls 100 ausgegeben. Daraus folgt, dass das Signal n_{offset} für diesen Zeitraum entweder ansteigt oder konstant ist. Ist der Timer 105 abgelaufen, so wird an dem Summationsglied 107 das Produkt aus dem Zustandswert 101 und K2 von dem Produkt aus Zustandswert 101 und K1 subtrahiert. Auch dieses Ergebnis unterliegt wieder den Grenzen des Steigungsbegrenzers 106. Aufgrund dessen ist nach Ablauf des Timers 105 das Signal n_{offset} fallend. Allerdings fällt das Offsetsignal nicht unter den Wert null. Das erfindungsgemäße Offsetmodul weist ferner einen weiteren Steuereingang am Switch auf (in Figur 2 nicht gezeigt), welcher nach Beendigung der Zusatzleistung nach einer abgelaufenen Zeit den Offset "freigibt".

In Fig. 3 ist schematisch das erfindungsgemäße Verfahren zum Betreiben einer Windenergieanlage gezeigt. Die Drehzahlregelung 21 gibt ein Solldrehzahlsignal nₛₑₜ aus. Zu diesem wird an einem Additionsglied, ein Offsetsignal n_{offset} addiert, welches vom Offsetmodul 100 generiert wurde. Das Ergebnis, das modifizierte Solldrehzahlsignal n_{set,m} wird als Sollwert an die Leistungssteuerung 25 übergeben.

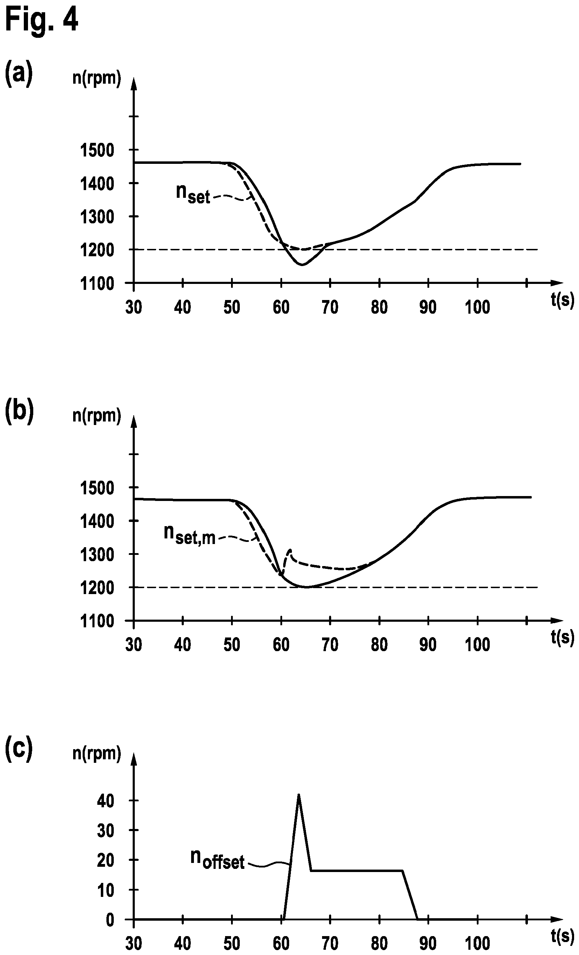

Für eine Windenergieanlage für die eine Anforderung für eine Unterstützungsleistung anliegt, ergibt sich das in Fig. 4a gezeigte Verhalten aus dem Stand der Technik. In diesem Fall stellt die Windenergieanlage eine angefragte Zusatzleistung zum Zeitpunkt t=50 Sekunden für 10 Sekunden zur Verfügung. Dies erfolgt durch einen kontinuierlichen Abfall der Drehzahl in diesem Bereich. Durch diesen Drehzahlabfall wird die kinetische Energie im Windrotor 12 verringert, die sich daraus ergebende Leistung wird als zusätzliche Leistung dem Generator und Umrichter 14, 15 zugeführt und als Primärregelleistung über die Leitung 17 ausgegeben. Zum Zeitpunkt t=60 Sekunden geht die Anlage wieder in einen Normalzustand über und stellt allmählich wieder den Betriebszustand vor der Bereitstellung der Zusatzleistung her. Obwohl der Solldrehzahlwert nₛₑₜ nicht unter einen Wert von 1200 rpm abfällt (gestrichelte Linie), ist in der Ist-Drehzahl (durchgezogene Linie) in Fig. 4a ein deutliches Unterschwingen der Ist-Drehzahl zu erkennen.

Es ist möglich, das Problem des Unterschwingens der Ist-Drehzahl und damit der Leistung durch eine modifizierte Solldrehzahl n_{set,m} in Fig. 4b zu beheben. Dabei ist der in Fig. 4c gezeigte Offset n_{offset} dem Solldrehzahlwert nₛₑₜ hinzugefügt. Der Offset zeigt einen starken Anstieg der Solldrehzahl nach dem Zeitpunkt t=60 Sekunden und damit nach der Bereitstellung der Zusatzleistung durch die Windenergieanlage. Die Ist-Drehzahl fällt in diesem Fall nicht mehr unterhalb eine Drehzahl von 1200 rpm ab. Der Einbruch der Ist-Drehzahl ist im Vergleich zu Fig. 4a reduziert.

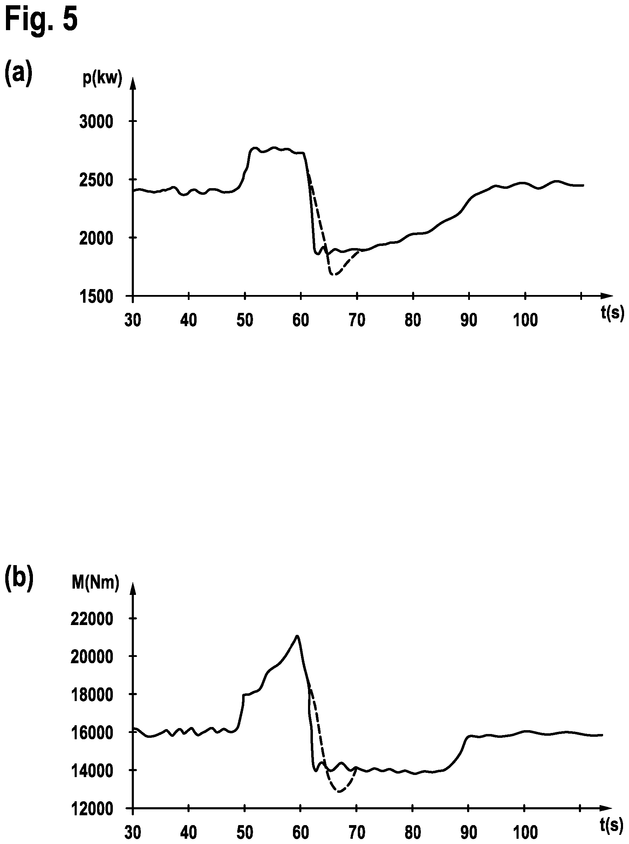

In Fig. 5 ist ein Leistungsdiagramm (a) und ein Drehmomentdiagramm (b) gezeigt, die den in Fig. 4 gezeigten Diagrammen entsprechen. Wie in Fig. 5a zu erkennen, stellt die Windenergieanlage ab einem Zeitpunkt t=50 Sekunden eine Zusatzleistung für 10 Sekunden zur Verfügung. Das in Fig. 5b gezeigte Drehmoment nimmt in diesem Zeitraum zu. Die durchgezogene Linie zeigt das Verhältnis der Parameter unter Verwendung des erfindungsgemäßen Offsets wie er in Fig. 4b und 4c gezeigt ist. Zum Vergleich ist die gestrichelte Linie gemäß dem Stand der Technik eingezeichnet. Der Leistungseinbruch nach Bereitstellung einer Zusatzleistung kann auf diese Weise deutlich reduziert werden.

## Patentansprüche

1. Windenergieanlage mit einem Windrotor (12), einem damit angetriebenen Generator (14), der mit einem Umrichter (15) zusammenwirkt zur Erzeugung elektrischer Leistung, einer Drehzahlregelung (21) und einer damit zusammenwirkenden Leistungssteuerung (25), wobei die Drehzahlregelung (21) ein Solldrehzahlsignal (nₛₑₜ) ausgibt, wobei ein Offsetmodul (100) zwischen der Drehzahlregelung (21) und der Leistungssteuerung (25) vorgesehen ist, welches dazu ausgelegt ist, ein Offsetsignal (n_{offset}) in Abhängigkeit eines Zustandswerts (102) zu generieren und dem Solldrehzahlsignal (nₛₑₜ) hinzuzufügen,
**dadurch gekennzeichnet, dass**
das Offsetsignal (n_{offset}) ansteigt, nachdem der Zustandswert (102) von einem Zustand der Zusatzleistungserzeugung in einen Normalzustand übergeht.

2. Windenergieanlage nach Anspruch 1, **dadurch gekennzeichnet, dass** das Offsetsignal (n_{offset}) einen sprunghaften Anstieg aufweist.

3. Windenergieanlage nach einem der Ansprüche 1 oder 2, **dadurch gekennzeichnet, dass** das Offsetmodul (100) einen gespeicherten Leistungswert (101) umfasst, und das Offsetsignal (n_{offset}) in Abhängigkeit von dem gespeicherten Leistungswert (101) ansteigt.

4. Windenergieanlage nach Anspruch 3, **dadurch gekennzeichnet**, das der gespeicherte Leistungswert (101) einem aktuellen Leistungswert in einem Normalbetrieb der Windenergieanlage entspricht und bei jedem Übergang des Zustandswerts (102) von dem Normalzustand in den Zustand der Zusatzleistungserzeugung aktualisiert wird.

5. Windenergieanlage nach einem der Ansprüche 1 bis 4, **dadurch gekennzeichnet, dass** das Offsetmodul (100) einen Timer (105) aufweist, der ein festes Zeitintervall vorgibt, für dessen Dauer das Offsetsignal (n_{offset}) ansteigt.

6. Windenergieanlage nach Anspruch 5, **dadurch gekennzeichnet, dass** das durch den Timer (105) definierte Zeitintervall eine Dauer von 5 Sekunden, vorzugsweise 2 Sekunden, weiter vorzugsweise 1 Sekunde nicht überschreitet.

7. Windenergieanlage nach einem der Ansprüche 5 oder 6, **dadurch gekennzeichnet, dass** das Offsetsignal (n_{offset}) nach Ablauf des Timers (105) abfällt.

8. Windenergieanlage nach Anspruch 7, **dadurch gekennzeichnet, dass** das Offsetsignal (n_{offset}) auf einen Wert abfällt, der dem Produkt aus dem gespeicherten Leistungswert (101) und einem Faktor entspricht.

9. Windenergieanlage nach einem der Ansprüche 2 bis 8, **dadurch gekennzeichnet, dass** das Offsetmodul (100) einen Steigungsbegrenzer (106) umfasst, der einen Anstieg und/oder einen Abfall des Offsetsignals (n_{offset}) begrenzt.

10. Verfahren zum Betreiben einer Windenergieanlage, die einen Windrotor (12), einen damit angetriebenen Generator (14), der mit einem Umrichter (15) zusammenwirkt zur Erzeugung elektrischer Leistung, eine Drehzahlregelung (21) und eine damit zusammenwirkende Leistungssteuerung (25) umfasst, mit den folgenden Schritten:
a. Ausgeben eines Solldrehzahlsignals (n_{ref}) durch die Drehzahlregelung (21),
b. Generieren eines Offsetsignals (n_{offset}) in Abhängigkeit eines Zustandswerts (102), wobei das Offsetsignal (n_{offset}) ansteigt, nachdem der Zustandswert (102) von einem Zustand der Zusatzleistungserzeugung in einen Normalzustand übergeht,
c. Hinzufügen des Offsetsignals (n_{offset}) zu dem Solldrehzahlsignal (nₛₑₜ),
d. Ausgeben des modifizierten Solldrehzahlsignals (n_{set,m}) an die Leistungssteuerung (25) .

11. Verfahren nach Anspruch 10, **dadurch gekennzeichnet, dass** eine Windenergieanlage nach einem der Ansprüche 1 bis 9 verwendet wird.

## Claims

1. Wind turbine having a wind rotor (12), a generator (14) that is driven by the latter and that acts in combination with a converter (15) to generate electrical power, a rotational-speed closed-loop control system (21) and, acting in combination therewith, a power open-loop control system (25), the rotational-speed closed-loop control system (21) emitting a setpoint rotational-speed signal (nₛₑₜ), an offset module (100) being provided between the rotational-speed closed-loop control system (21) and the power open-loop control system (25), said offset module being designed to generate an offset signal (n_{offset}) in dependence on a state value (102) and to add said offset signal to the setpoint rotational-speed signal (nₛₑₜ),
**characterized in that**
the offset signal (n_{offset}) rises after the state value (102) changes over from a state of additional power generation to a normal state.

2. Wind turbine according to Claim 1, **characterized in that** the offset signal (n_{offset}) has a step-type rise.

3. Wind turbine according to either of Claims 1 and 2, **characterized in that** the offset module (100) comprises a stored power value (101), and the offset signal (n_{offset}) rises in dependence on the stored power value (101).

4. Wind turbine according to Claim 3, **characterized in that** the stored power value (101) corresponds to a current power value in normal operation of the wind turbine, and is updated upon each changeover of the state value (102) from the normal state to the state of additional power generation.

5. Wind turbine according to any of Claims 1 to 4, **characterized in that** the offset module (100) has a timer (105), which specifies a fixed time interval for the duration of which the offset signal (n_{offset}) rises.

6. Wind turbine according to Claim 5, **characterized in that** the time interval defined by the timer (105) does not exceed a duration of 5 seconds, preferably 2 seconds, more preferably 1 second.

7. Wind turbine according to either of Claims 5 and 6, **characterized in that** the offset signal (n_{offset}) drops after the timer (105) has elapsed.

8. Wind turbine according to Claim 7, **characterized in that** the offset signal (n_{offset}) drops to a value that corresponds to the product from the stored power value (101) and a factor.

9. Wind turbine according to any of Claims 2 to 8, **characterized in that** the offset module (100) comprises a slope limiter (106), which limits a rise and/or a drop of the offset signal (n_{offset}).

10. Method for operating a wind turbine that comprises a wind rotor (12), a generator (14) that is driven by the latter and that acts in combination with a converter (15) to generate electrical power, a rotational-speed closed-loop control system (21) and, acting in combination therewith, a power open-loop control system (25), having the following steps:
a. outputting of a setpoint rotational-speed signal (n_{ref}) by the rotational-speed closed-loop control system (21),
b. generating an offset signal (n_{offset}) in dependence on a state value (102), the offset signal (n_{offset}) rising after the state value (102) changes over from a state of additional power generation to a normal state,
c. adding the offset signal (n_{offset}) to the setpoint rotational-speed signal (nₛₑₜ),
d. outputting the modified setpoint rotational-speed signal (n_{set,m}) to the power open-loop control system (25) .

11. Method according to Claim 10, **characterized in that** a wind turbine according to one of Claims 1 to 9 is used.

## Revendications

1. Eolienne comprenant un rotor éolien (12), un générateur (14) entraîné par celui-ci et qui coopère avec un convertisseur (15) pour produire de la puissance électrique, un dispositif de régulation de vitesse de rotation (21) et un dispositif de commande de puissance (25) coopérant avec celui-ci, le dispositif de régulation de vitesse de rotation (21) sortant un signal de vitesse de rotation de consigne (nₛₑₜ), dans laquelle un module de décalage (100) est prévu entre le dispositif de régulation de vitesse de rotation (21) et le dispositif de commande de puissance (25) et qui est conçu pour produire un signal de décalage (n_{offset}) en fonction d'une valeur d'état (102) et pour l'ajouter au signal de vitesse de rotation de consigne (nₛₑₜ),
**caractérisée en ce que**
le signal de décalage (n_{offset}) augmente après que la valeur d'état (102) est passée d'un état de production de puissance supplémentaire à un état normal.

2. Eolienne selon la revendication 1, **caractérisée en ce que** le signal de décalage (n_{offset}) présente une augmentation discontinue.

3. Eolienne selon l'une quelconque des revendications 1 ou 2, **caractérisée en ce que** le module de décalage (100) comprend une valeur de puissance stockée (101), et le signal de décalage (n_{offset}) augmente en fonction de la valeur de puissance stockée (101).

4. Eolienne selon la revendication 3, **caractérisée en ce que** la valeur de puissance stockée (101) correspond à une valeur de puissance actuelle en fonctionnement normal de l'éolienne et est mise à jour chaque fois que la valeur d'état (102) passe de l'état normal à l'état de production de puissance supplémentaire.

5. Eolienne selon l'une quelconque des revendications 1 à 4, **caractérisée en ce que** le module de décalage (100) présente un temporisateur (105) qui spécifie un intervalle de temps fixe pendant lequel le signal de décalage (n_{off-set}) augmente.

6. Eolienne selon la revendication 5, **caractérisée en ce que** l'intervalle de temps défini par le temporisateur (105) ne dépasse pas une durée de 5 secondes, de préférence de 2 secondes, de plus grande préférence de 1 seconde.

7. Eolienne selon l'une quelconque des revendications 5 ou 6, **caractérisée en ce que** le signal de décalage (n_{offset}) diminue à l'expiration du temporisateur (105).

8. Eolienne selon la revendication 7, **caractérisée en ce que** le signal de décalage (n_{offset}) diminue jusqu'à une valeur qui correspond au produit de la valeur de puissance stockée (101) et d'un facteur.

9. Eolienne selon l'une quelconque des revendications 2 à 8, **caractérisée en ce que** le module de décalage (100) comprend un limiteur d'augmentation (106) qui limite une augmentation et/ou une diminution du signal de décalage (n_{offset}).

10. Procédé d'exploitation d'une éolienne qui comprend un rotor éolien (12), un générateur (14) entraîné par celui-ci et qui coopère avec un convertisseur (15) pour produire de la puissance électrique, un dispositif de régulation de vitesse de rotation (21) et un dispositif de commande de puissance (25) coopérant avec celui-ci, comprenant les étapes suivantes consistant à :
a. sortir un signal de vitesse de rotation de consigne (n_{ref}) par le dispositif de régulation de vitesse de rotation (21),
b. produire un signal de décalage (n_{offset}) en fonction d'une valeur d'état (102), le signal de décalage (n_{offset}) augmentant après que la valeur d'état (102) est passée d'un état de production de puissance supplémentaire à un état normal,
c. ajouter le signal de décalage (n_{offset}) au signal de vitesse de rotation de consigne (nₛₑₜ),
d. sortir le signal de vitesse de rotation de consigne (n_{set,m}) au dispositif de commande de puissance (25) .

11. Procédé selon la revendication 10, **caractérisé en ce qu'**une éolienne selon l'une quelconque des revendications 1 à 9 est utilisée.
